# EUROPÄISCHE PATENTSCHRIFT

(11) **EP 1 466 121 B1**
(45) Veröffentlichungstag und Bekanntmachung des Hinweises auf die Patenterteilung: **21.06.2006**
(21) Anmeldenummer: 02808141.2
(22) Anmeldetag: 03.12.2002
(51) Int. Cl.: F16P 1/06

(54) **LASERSCHUTZWAND**
LASER PROTECTION SCREEN
PAROI DE PROTECTION CONTRE LES RAYONS LASER

(30) Priorität: 17.01.2002 DE 20200664 U
(43) Veröffentlichungstag der Anmeldung: 13.10.2004
(73) Patentinhaber: Kahl, Helmut, D-32457 Porta Westfalica (DE)
(72) Erfinder: Kahl, Helmut, D-32457 Porta Westfalica (DE)
(74) Vertreter: Philipp, Matthias
(86) Internationale Anmeldenummer: PCT/EP2002/013645
(87) Internationale Veröffentlichungsnummer: WO 2004/048843

(56) Entgegenhaltungen:
- WO-A-95/20725
- DE-A- 19 855 793
- DE-C- 19 852 118
- DE-U- 20 200 664

## Beschreibung

Die Erfindung betrifft eine Schutzwand zur Abschirmung von, insbesondere aus Schweißanlagen stammenden, Laserstrahlen gemäß Oberbegriff des Anspruchs 1.

Derartige Laserschutzwände sind aus der DE 198 55 793.0 bekannt. Bei diesen sind die Profilelemente jeweils zu Rahmen zusammengefügt, welche in den Nuten mit eingepaßten Blechplatten bestückt sind. Diese Konstruktion weist den Nachteil auf, daß die Wände aus großflächigen gerahmten Plattenelementen bestehen und deshalb der Aufbau jeder Schutzkabine eine zurichtung der Wandelemente erfordert und eine Reparatur einer im rauhen Werkstattbetrieb beschädigten Wand oder eine Verlagerung oder Veränderung einer daraus gebildeten Kabine mit erheblichem Zeitaufwand und im allgemeinen Verschnitt an Profil- und Plattenmaterial verbunden ist.

Es ist Aufgabe der Erfindung, ein einfaches Schutzwandsystem zu schaffen, das den Aufbau, einen Umbau und eine Reparatur wesentlich erleichtert.

Die Lösung besteht darin, daß die Leichtmetall-Profilelemente Seitenwand an Seitenwand zur Schutzwand gereiht miteinander einzeln lösbar verbunden sind, indem die seitliche Profilierung von einer Frontwand zu einer Rückwand stufenweise ausgebildet ist.

Vorteilhafte Ausgestaltungen sind in den Unteransprüchen angegeben.

Vorteilhaft weist die stufenförmige Profilierung einerseits Leistenansätze und andererseits dazu passende Nuten auf, die zur Front- bzw. Rückseite der Wand hin orientiert sind.

Die jeweils auseinander weiter stehenden hakenförmigen Leistenansätze setzen sich vorzugsweise in der Frontwand fort, und zueinander enger stehende Leistenansätze erstrecken sich als entweder freier Seitenwandabschnitt oder hakenförmig neben der Seitenwand und enden jeweils etwa um die Wandstärke hinter die Front- oder Rückwand zurückversetzt. Auf diese Weise ergibt sich eine glatte Front oder Rückseite der Schutzwand, wenn die Leisten in den Nuten eingesteckt angeschlagen sind.

Vorteilhaft gibt es verschieden breite Profilelemente sowie ein Eckstück, dessen Front- und Rückwand gewinkelt sind, so daß die der Verbindung dienenden Seitenwände im rechten Winkel zueinander stehen.

Die Seitenwände weisen außer den hakenförmige Leistenverbindern vorzugsweise hinterschnittene Nuten auf, in denen wandplatten, Türscharniere etc. gehalten werden können, wie bei de vorbekannten Schutzwandsystem.

Die Frontwand weist vorzugsweise in ihren Seitenbereichen hinterschnittene Nuten auf, in denen Verbindungs- und/oder Verkleidungsplatten kraftschlüssig oder eingerastet gehalten werden können. Die Verkleidungsplatten erstrecken sich vorzugsweise von einem Profilelement zum benachbarten und stellen somit eine zusätzliche Verbindung her. Die Außenfront der Verkleidungsplatten ist vorzugsweise gerillt profiliert. Die Verkleidungsplatten sind vorteilhaft mit ihren Klemmhaken und der Frontprofilierung aus Leichtmetall stranggepreßt.

Die Wanddicke ist beispielsweise 80 mm, und der Abstand der frontseitigen Nuten entspricht zweckmäßig der halben Wanddicke.

In den weiterhin beschriebenen Beispielen sind die Profilelemente vertikal angeordnet. Sie können jedoch ebenso horizontal aufgereiht werden, wobei sie von einer Seite in vertikalen Verbindungsprofilen lösbar gehalten, z.B. verschraubt, sind. Auch bei dieser Anordnung lassen sich ein oder zwei Profilelemente abschrauben, herausnehmen und austauschen, da die Verbindungsprofile nur auf der einen Seite vorgesehen werden. Die Stufung der Seitenwände verhindert ein Durchdringen eines Laserstrahls durch toleranzbedingte Spalten, die zwischen den Profilelementen auftreten und erlaubt außerdem ein einseitiges Herausnehmen und Auswechseln von einzelnen Profilelementen.

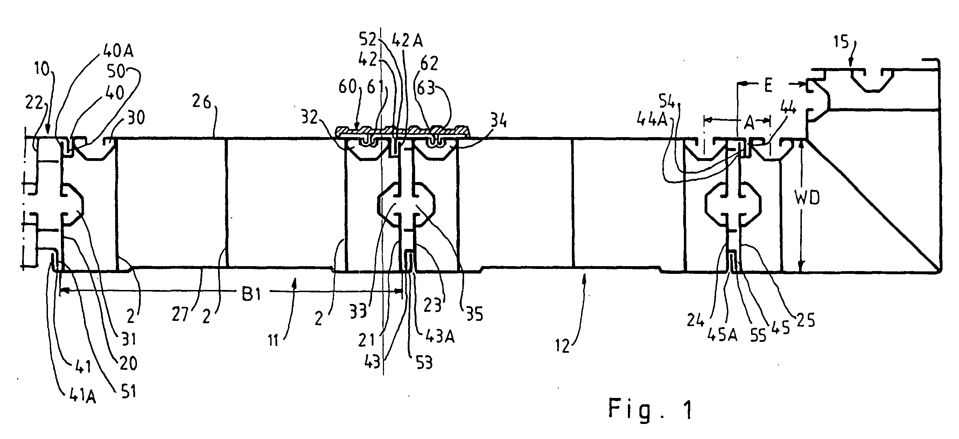

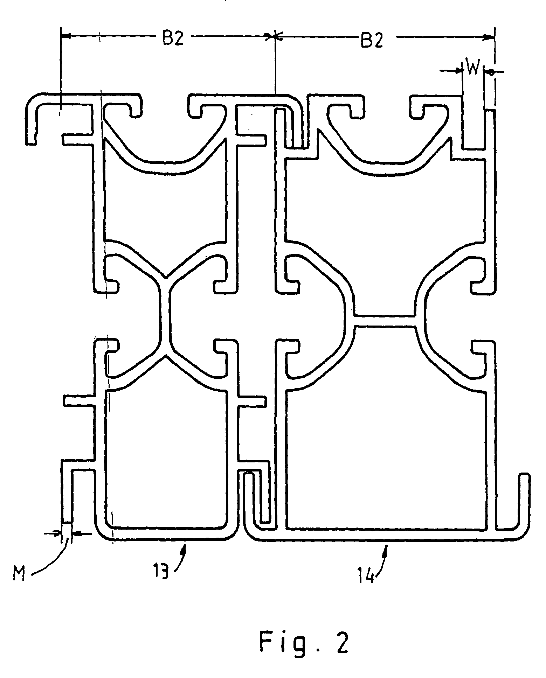

Vorteilhafte Ausgestaltungen sind in den Fig. 1 und 2 dargestellt.
- Fig. 1: zeigt einen Wandabschnitt mit Eckprofil;
- Fig. 2: zeigt einen Wandabschnitt aus Kurzelementen.

Fig. 1 zeigt einen Schutzwandabschnitt 1 aus flachen Profilelementen 10, 11, 12 und einem Eckprofilelement 15, die durch Zwischenwände 2 mit Hohlkammern versehen sind. Die Seitenwände 20 - 25 der Profilelemente 10 - 12, 15 weisen jeweils nahe der Frontwand 26 und der Rückwand 27 des Profilelementes ineinander-greifende Nut-Federverbindungen auf, die durch freistehende oder hakenförmige Leistenansätze 41A - 43A; 50 - 53 mit jeweils einer benachbarten Nut 40 - 45 gebildet werden. An benachbarten Profilelementen 10, 11, 12 sind die Federn mit den Nuten jeweils alternierend zur Frontseite bzw. zur Rückseite der Wand orientiert, so daß die Profilelemente wechselweise entweder an der Frontseite oder an der Rückseite herausgenommen und ausgewechselt werden können. Sind zwei der Profilelemente nach einer Seite herausgenommen, so können auch alle zwischenliegenden Profilelemente frei herausgenommen werden. Ebenso läßt sich bei entsprechender Reihenfolge der Profilelemente der Zusammenbau von jeder beliebigen Seite aus durchführen.

Die Leistenansätze 41A, 43 A an derjenigen Seite der Seitenwände 20, 21, von der aus das Profilelement 11 einzusetzen ist, sind um die Nut- und Leistenweite W, M seitlich weiter gestaffelt als die Leistenansätze 40A, 42A an der gegenüberliegenden Front 26.

Vorzugsweise erstrecken sich die weiter außen liegenden Leistenansätze 41A, 43A hakenförmig aus der freien Wand 27. Die enger stehenden Leistenansätze 40A, 42A; 53, 55 als freie Enden der Seitenwände 20, 21 oder hakenförmig parallel dazu. Die Enden der enger stehenden Leistenansätze sind jeweils gegen die Front- oder Rückwand 26, 27 und eine Materialstärke M zurückversetzt, so daß bei in dem Nutengrund angeschlagenen Leistenansätzen 50, 53 die Front- und die Rückseiten 26, 27 der Profilelemente 10, 12 jeweils miteinander fluchten.

Die Seitenwände 20, 21 weisen mittig hinterschnittene Nuten 31, 33 auf, die ggf. Wandplatten, Türanschlüsse etc. aufnehmen können.

Auf der Frontseite 26 sind in den beiden Endbereichen weitere hinterschnittene Nuten 30, 32, 34 eingeformt. Diese dienen entweder zur Aufnahme von Anschlußelementen oder, wie dargestellt, von Verkleidungsplatten 60, die mit Federelementen 61, 62 an den Nuträndern kraftschlüssig oder rastend gehalten sind. Die Plattentront ist mit einer Profilierung 63 versehen.

Die frontseitigen, jeweils benachbarten Nuten 32, 34 weisen einen Mittenabstand A von etwa der halben Wanddicke WD auf, die beispielsweise 80 mm beträgt.

Das gezeigte Eckprofil 15 weist an den Seitenwänden 25 die entsprechende Nut-Leistenanordnung 44, 44A, 45, 45A auf, in die die Leistenansätze 54, 55 des benachbarten flachen Profilelements 12 eingreifen.

Der Vielfalt der Anforderungen eines Kabinenbaues wird durch Profilelemente 10 - 14 unterschiedlicher Breiten B1, B2 entsprochen. Neben den in Fig. 1 gezeigten 200 mm breiten Profilelementen 10 - 12 sind in Fig. 2 Profilelemente 13, 14 von 40 mm Breite B2 in vergrößertem Maßstab gezeigt. Da auch das Eckmaß E des Eckstückes 15, Fig. 1, 40 mm beträgt, lassen sich Kabinen im 40 mm Raster innen bzw. außen erstellen.

Die Oberflächen der Profil- und Wandelemente sind in bekannter Weise zweckmäßig mit Eloxal und/oder Chromat beschichtet, wodurch das Durchdringen der Laserstrahlen durch die verschiedenen Wandschichten behindert wird.

### Bezugszeichenliste

- 1: Schutzwand
- 2: Innenwände
- 10, 11, 12, 13, 14: Profilelemente
- 15: Eckprofilelement
- 20, 21, 22, 23, 24, 25: Seitenwände
- 26: Frontwand
- 27: Rückwand
- 30, 31, 32, 33, 34, 35: Nuten
- 40, 41, 42, 43, 44, 45: Nuten
- 40A, 41A, 42A, 43A: Leistenansätze
- 50, 51, 52, 53, 54, 55: Leistenansätze
- 60: Verkleidungsplatten
- 61, 62: Federelemente
- 63: Profilring
- A: Nutmittenabstand
- B1, B2: Profilbreiten
- E: Eckmaß
- M: Materialstärke, Leistenweite
- W: Nutweite
- WD: Wanddicke

## Patentansprüche

1. Schutzwand (1) zur Abschirmung von, insbesondere aus Schweißanlagen stammenden, Laserstrahlen, wobei die Schutzwand (1) Leichtmetall-Profilelemente (10 - 13) enthält, die im wesentlichen rechteckig sind und durch Innenwände (2) ausgebildete Kammern und seitlich und wahlweise zusätzlich frontseitig ausgebildete Profilierungen aufweist,
**dadurch gekennzeichnet, daß** die Leichtmetall-Profilelemente (10 - 14) Seitenwand an Seitenwand zur Schutzwand (20, 22; 21, 23; 24, 25) gereiht miteinander einzeln lösbar verbunden sind, indem die seitliche Profilierung von einer Frontwand (26) zu einer Rückwand (27) stufenweise ausgebildet ist.

2. Schutzwand nach Anspruch 1, **dadurch gekennzeichnet, daß** die Profilierung an den Seitenwänden (20 - 25) jeweils hinter hakenförmigen Leistenansätzen (40A - 43A) passend zu diesen jeweils parallel zur Seitenwand Nuten (40 - 43) ausgebildet ist, in die die Leistenansätze (50 - 53) der benachbarten Seitenwand (22, 23) jeweils eingreifen und daß die Leistenansätze (40A, 41A; 42A, 43A) jeweils mit der zugehörigen Nute (50 - 53) an jeder Seitenwand (20, 21) von der Frontwand (26) zu der Rückwand (27) stufenweise seitlich versetzt zueinander ausgebildet sind, so daß an den einzelnen Profilelementen (10 - 14) alternierend frontseitige Leistenansätze (40A, 42A) enger zueinander stehen als rückseitige und umgekehrt.

3. Schutzwand nach Anspruch 1 oder 2, **dadurch gekennzeichnet, daß** sich die jeweils weiter auseinanderstehenden hakenförmigen Leistenansätze (41A, 43A) in die Front- oder Rückwand (26, 27) bündig anschließen und daß die jeweils enger zueinander stehenden Leistenansätze (40A, 42A) Fortsätze der Seitenwand (20, 21) sind oder als hakenförmige Leistenansätze (51, 53) an die Seitenwand (22, 23) angeformt sind.

4. Schutzwand nach Anspruch 3, **dadurch gekennzeichnet, daß** die jeweils enger zueinander stehenden Leistenansätze (40A, 42A; 51, 53) um eine Materialstärke (M) gegenüber der Front- oder Rückwand (26, 27) zurückversetzt enden, so daß jeweils eine fluchtende Front- und Rückwand gebildet ist.

5. Schutzwand nach einem der vorstehenden Ansprüche, **dadurch gekennzeichnet, daß** die Profilelemente (10 - 14) verschiedene Breiten (B1, B2) aufweisen, die jeweils ganzzahlige Vielfache einer Grundbreite (B2) sind.

6. Schutzwand nach Anspruch 5, **dadurch gekennzeichnet, daß** sie eine Wanddicke (WD) hat, die zwei Grundbreiten (B2) entspricht.

7. Schutzwand nach einem der vorstehenden Ansprüche, **dadurch gekennzeichnet, daß** das Profilelement (15) ein Eckprofilelement ist, das jeweils eine rechtwinklig geformte Front- und Rückwand aufweist und seine Seitenwände (25) im rechten Winkel zueinander stehen.

8. Schutzwand nach einem der vorstehenden Ansprüche, **dadurch gekennzeichnet, daß** die seitlichen hinterschnittenen Nuten (31, 33, 35) jeweils auf den Seitenwänden (20, 21, 23) mittig angeordnet und weitenmäßig jeweils für eine mehrschichtige Laserschutzwandplatte geeignet sind.

9. Schutzwand nach einem der vorstehenden Ansprüche, **dadurch gekennzeichnet, daß** die frontseitigen hinterschnittenen Nuten (30, 32) jeweils nah benachbart zu den Nuten (40, 42), die die Leistenansätze (50, 52) aufnehmen, verlaufen.

10. Schutzwand nach Anspruch 9, **dadurch gekennzeichnet, daß** die frontseitigen hinterschnittenen Nuten (32, 34) benachbarter Profilelemente (11, 12; 13, 14) einen Mittenabstand (A) aufweisen, der der Grundbreite (B2) entspricht.

11. Schutzwand nach Anspruch 9 oder 10, **dadurch gekennzeichnet, daß** die frontseitigen hinterschnittenen Nuten (30, 32, 34) jeweils weitenmäßig zur Aufnahme einer mehrschichtigen Laserschutzwandplatte geeignet sind.

12. Schutzwand nach einem der Ansprüche 9 bis 11, **dadurch gekennzeichnet, daß** die frontseitige hintere Nut 30 - 34 an dem Eckprofilelement (15) ausgebildet sind und dessen abgewinkelte Frontseitenbereiche jeweils ein Eckmaß (E) haben, das der Grundbreite (B2) entspricht.

13. Schutzwand nach einem der Ansprüche 5 - 12, **dadurch gekennzeichnet, daß** die Grundbreite 30 - 50 insbesondere 40 mm beträgt.

14. Schutzwand nach einem der Ansprüche 9 - 13, **dadurch gekennzeichnet, daß** in den frontseitigen hinteren Nuten (30 - 34) Verkleidungsplatten (60) mittels daran angeformter Federelemente (61, 62) gehalten sind.

15. Schutzwand nach Anspruch 14, **dadurch gekennzeichnet, daß** die Verkleidungsplatten (60) frontseitig eine Profilierung (63) aufweisen.

16. Schutzwand nach Anspruch 14 oder 15, **dadurch gekennzeichnet, daß** die Verkleidungsplatten (60) sich von Profilelement (11) zu Profilelement (12) erstrecken.

17. Schutzwand nach einem der vorstehenden Ansprüche, **dadurch gekennzeichnet, daß** die Profilelemente (10 - 15) und/oder die Verkleidungsplatten (60) aus Leichtmetall stranggepreßt sind und mit Eloxal und/oder Chromat beschichtet sind.

## Claims

1. A protective wall (1) for shielding against laser beams, in particular those stemming from welding machines, wherein the protective wall (1) contains light-alloy shaped sections (10-13) that are essentially rectangular and incorporates chambers that are formed by interior walls (2) and profilings that are formed on the side and optionally additionally profilings that are formed on the front,
**characterized in that** the light-alloy shaped sections (10 - 14) are lined up and connected side wall to side wall in an individually removable manner to form the protective wall (20, 22; 21, 23; 24, 25) in such a way that the profiling on the side is implemented step-like from a front wall (26) to a back wall (27).

2. A protective wall according to claim 1, **characterized in that** the profiling on the side walls (20 - 25) is implemented in each case behind hook-shaped strip projections (40A - 43A) matching the same, parallel in each case to the side-wall grooves (40 - 43) into which the strip projections (50 - 53) of the adjoining side wall (22, 23) engage in each case, and that the strip projections (40A, 41A; 42A, 43A) with the respective associated groove (50 - 53) are implemented laterally offset relative to one another on each side wall (20, 21) in a step-like manner from the front wall (26) to the back wall (27) so that on the individual shaped sections (10 - 14) front strip projections (40A, 42) are located alternately closer to one another than those on the back, and vice versa.

3. A protective wall according to claim 1 or 2, **characterized in that** the given hook-shaped strip projections (41A, 43A) that are spaced further apart extend flush into the front or back wall (26, 27) and that the given more closely spaced strip projections (40A, 42A) are extensions of the side wall (20,21) or formed integral with the side wall (22, 23) as hook-shaped strip projections (51, 53).

4. A protective wall according to claim 3, **characterized in that** the given more closely spaced strip projections (40A, 42A; 51, 53) end recessed relative to the front or back wall (26, 27) by one material thickness (M), so that a flush front and back wall is created in each case.

5. A protective wall according to any of the above claims, **characterized in that** the shaped sections (10 - 14) have different widths (B1, B2), each of which are whole-number multiples of one base width (B2).

6. A protective wall according to claim 5, **characterized in that** it has a wall thickness (WD) that corresponds to two base widths (B2).

7. A protective wall according to any of the above claims, **characterized in that** the shaped section (15) is a corner shaped section, incorporating in each case a rectangular front and back wall and its side walls (25) are positioned at a right angle to one another.

8. A protective wall according to any of the above claims, **characterized in that** the undercut grooves (31, 33, 35) on the side are disposed centrically on the side walls (20, 21, 23) in each case and their width is suitable in each case for a multi-layered laser protective wall plate.

9. A protective wall according to any of the above claims, **characterized in that** the undercut grooves (30, 32) on the front extend closely adjacent in each case to the grooves (40, 42) that receive the strip projections (50, 52).

10. A protective wall according to claim 9, **characterized in that** the undercut grooves (32, 34) on the front of adjoining shaped sections (11, 12; 13, 14) have a center distance (A) that corresponds to the base width (B2).

11. A protective wall according to claim 9 or 10, **characterized in that** the undercut grooves (30, 32, 34) on the front are suitable in their width in each case to receive a multi-layered laser protective wall plate.

12. A protective wall according to any of claims 9 through 11, **characterized in that** the rear grooves 30 - 34 on the front are implemented on the corner shaped section (15), and its angled front wall areas each have a width across the corner (E) that corresponds to the base width (B2).

13. A protective wall according to any of claims 5 - 12, **characterized in that** the base width 30 - 50 is 40 mm in particular

14. A protective wall according to any of claims 9 - 13, **characterized in that**, in the rear grooves (30 - 34) on the front, finishing plates (60) are held by means of spring elements (61, 62) formed integrally thereon.

15. A protective wall according to claim 14, **characterized in that** the finishing plates (60) have a profiling (63) on the front.

16. A protective wall according to claim 14 or 15, **characterized in that** the finishing plates (60) extend from shaped section (11) to shaped section (12).

17. A protective wall according to any of the above claims, **characterized in that** the shaped sections (10 - 15) and/or the finishing plates (60) are extruded from light alloy and provided with an anodized or chromate coating.

## Revendications

1. Paroi de protection (1) pour écranter face à des rayons laser, en particulier, provenant d'installations de soudage, la paroi de protection (1) contenant des éléments profilés en métal léger (10 à 13), de forme sensiblement rectangulaire, et des chambres, constituées par des parois intérieures (2), et présente des profilages latéraux et au choix, en plus, des profilages frontaux,
**caractérisée en ce que** les éléments profilés en métal léger (10 à 14) sont reliés de façon désolidarisable individuellement entre eux, en rangées, paroi latérale contre paroi latérale, pour former la paroi de protection (20, 22 ; 21, 23 ; 24, 25), **en ce que** le profilage latéral est formé en échelle, d'une paroi frontale (26) à une paroi arrière (27).

2. Paroi de protection selon la revendication 1, **caractérisée en ce que** le profilage, sur les parois latérales (20 à 25), est réalisé chaque fois à partir de rainures (40 à 43), s'ajustant derrière des appendices de bande (40A à 43A) en forme de crochet, par rapport à ceux-ci, chaque fois parallèlement à la paroi latérale, dans lesquelles les appendices de bande (50 à 53) dans chacun desquels de la paroi latérale (22, 23) voisine s'engagent, et **en ce que** les appendices de bande (40A, 41A ; 42A, 43A) sont réalisés décalés les uns par rapport aux autres en gradins avec la rainure (50 à 53) afférente, sur chaque paroi latérale (20, 21), de la paroi frontale (26) à la paroi arrière (27), de sorte que des appendices de bande (40A, 42A) frontaux sont implantés plus étroitement les uns par rapport aux autres que ceux arrière et inversement.

3. Paroi de protection selon la revendication 1 ou 2, **caractérisée en ce que** les appendices de bande (41A, 43A) en forme de crochet, chaque fois plus écartés les uns des autres, se raccordent en affleurement dans la paroi avant ou arrière (26, 27), et **en ce que** les appendices de bande (40A, 42A), placés chaque fois plus étroitement les uns par rapport aux autres, sont des appendices de la paroi latérale (20, 21) ou des appendices de bande (51, 53) réalisés en forme de crochet, formés d'un seul tenant sur la paroi latérale (22, 23).

4. Paroi de protection selon la revendication 3, **caractérisée en ce que** les appendices de bande (40A, 42A ; 51, 53), placés chaque fois plus étroitement les uns par rapport aux autres, s'achèvent, avec un décalage de retrait de la valeur d'une épaisseur de matériau (M) par rapport à la paroi avant ou arrière (26, 27), de manière à former chaque fois une paroi avant et arrière en alignement.

5. Paroi de protection selon l'une des revendications précédentes, **caractérisée en ce que** les éléments profilés (10 à 14) présentent des largeurs (B1, B2) différentes, qui sont chaque fois un multiple entier d'une largeur de base (B2).

6. Paroi de protection selon la revendication 5, **caractérisée en ce qu'**elle a une épaisseur de paroi (WD) correspondant à deux largeurs de base (B2).

7. Paroi de protection selon l'une des revendications précédentes, **caractérisée en ce que** l'élément profilé (15) est un élément de profil d'angle présentant individuellement une paroi avant et une paroi arrière de forme rectangulaire, et ses parois latérales (25) étant placées à angle droit les unes par rapport aux autres.

8. Paroi de protection selon l'une des revendications précédentes, **caractérisée en ce que** les rainures (31, 33, 35) ayant une contre-dépouille latérale sont disposées chacune centralement sur les parois latérales (20, 21, 23) et conviennent en largeur chacune pour une plaque de paroi de protection laser à plusieurs couches.

9. Paroi de protection selon l'une des revendications précédentes, **caractérisée en ce que** les rainures (30, 32) ayant une contre-dépouille sur le côté avant s'étendent chacune de façon proche, au voisinage des rainures (40, 42) qui reçoivent les appendices de bande (50, 52).

10. Paroi de protection selon la revendication 9, **caractérisée en ce que** les rainures (32, 34), ayant une contre-dépouille du côté avant d'éléments profilés (11, 12 ; 13, 14) voisins, présentent un espacement médian (A) correspondant à la largeur de base (B2).

11. Paroi de protection selon la revendication 9 ou 10, **caractérisée en ce que** les rainures (30, 32, 34), ayant une contre-dépouille côté avant, conviennent chacune en largeur pour recevoir une plaque de paroi de protection laser à plusieurs couches.

12. Paroi de protection selon l'une des revendications 9 à 11, **caractérisée en ce que** les rainures arrière (30 à 34), côté avant, sont réalisées sur l'élément profilé d'angle (15), et dont les zones de côté avant coudées ont chacune une longueur de coin (E) correspond à la largeur de base (B2).

13. Paroi de protection selon l'une des revendications 5 à 12, **caractérisée en ce que** la largeur de base est de 30 à 50 mm, en particulier de 40 mm.

14. Paroi de protection selon l'une des revendications 9 à 13, **caractérisée en ce que** des plaques d'habillage (60) sont maintenues dans les rainures arrière (30 à 34) situées côté avant, au moyen d'éléments élastiques (61, 62) formés d'un seul tenant sur elles.

15. Paroi de protection selon la revendication 14, **caractérisée en ce que** les plaques d'habillage (60) présentent côté avant un profilage (63).

16. Paroi de protection selon la revendication 14 ou 15, **caractérisée en ce que** les plaques d'habillage (60) s'étendent de l'élément profilé (11) à l'élément profilé (12).

17. Paroi de protection selon l'une des revendications précédentes, **caractérisée en ce que** les éléments profilés (10 à 15) et/ou les plaques d'habillage (60) sont obtenus par extrusion en métal léger et sont munis d'un revêtement en eloxal et/ou en chromate.
